(19) Europäisches Patentamt
European Patent Office
Office européen des brevets

(11) **EP 3 253 139 B1**

(12) **FASCICULE DE BREVET EUROPEEN**

(45) Date de publication et mention de la délivrance du brevet:
**27.02.2019 Bulletin 2019/09**

(51) Int Cl.:
*H04W 56/00* (2009.01)  *H04W 84/18* (2009.01)
*G01S 5/02* (2010.01)

(21) Numéro de dépôt: **17173606.9**

(22) Date de dépôt: **31.05.2017**

(54) **MÉTHODE DE SYNCHRONISATION DE NOEUDS DANS UN RÉSEAU DE CAPTEURS SANS FIL**

SYNCHRONISIERUNGSMETHODE VON KNOTEN IN EINEM DRAHTLOSEN SENSORNETZWERK

METHOD FOR SYNCHRONISING NODES IN A WIRELESS SENSOR NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2016 FR 1655026**

(43) Date de publication de la demande:
**06.12.2017 Bulletin 2017/49**

(73) Titulaires:
• **MAPLE HIGH TECH**
  **31100 Toulouse (FR)**
• **UT2J**
  **31058 Toulouse Cedex 9 (FR)**

(72) Inventeurs:
• **TANCEREL, Ludovic**
  **31200 Toulouse (FR)**
• **DALCE, Réjane**
  **81100 Castres (FR)**
• **DESPAUX, François**
  **54300 Chanteheux (FR)**
• **VAN DEN BOSSCHE, Adrien**
  **82170 Dieupentale (FR)**
• **VAL, Thierry**
  **31700 Beauzelle (FR)**
• **JAFFRES-RUNSER, Katia**
  **31300 Toulouse (FR)**

(74) Mandataire: **Augarde, Eric**
  **Brevalex**
  **56 Boulevard de l'Embouchure,**
  **Bât. B**
  **B.P. 27519**
  **31075 Toulouse Cedex 2 (FR)**

(56) Documents cités:
  **EP-A1- 3 021 129     WO-A2-2012/059903**

**Description**

**DOMAINE TECHNIQUE**

L'objet de la présente invention concerne le domaine des réseaux de capteurs sans fil ou WSNs (Wireless Sensor Networks) et plus particulièrement ceux utilisant une transmission UWB (Ultra Wide Band). La présente invention trouve application dans la synchronisation de noeuds dans un réseau sans fil et, subsidiairement, dans le domaine de la localisation d'un noeud mobile au moyen d'un tel réseau.

**ÉTAT DE LA TECHNIQUE ANTÉRIEURE**

Les réseaux de capteurs sans fils ou WSNs (*Wireless Sensor Networks*) sont bien connus de l'état de la technique.

On rappelle qu'un réseau WSN est un réseau sans fil comportant un grand nombre de noeuds qui sont en général des capteurs capables de récolter et de transmettre des mesures de manière autonome. La position des noeuds dans un tel réseau n'est pas nécessairement déterminée. Lorsqu'un noeud du réseau connaît sa position ou peut la déterminer, il est dénommé « noeud-ancre » (*anchor node*) ou simplement ancre (*anchor*).

Un tel réseau WSN permet de déterminer la position d'une étiquette (ou tag) à partir des instants d'arrivée ou ToAs (*Time of Arrival*) respectifs d'un signal émis par cette étiquette et reçu par une pluralité d'ancres du réseau. Toutefois, cette méthode de localisation nécessite que les noeuds du réseau, à tout le moins les noeuds-ancres à portée de l'étiquette, soient synchronisés. Par synchronisation, on entend que les noeuds en question partagent une même référence temporelle.

De manière générale, la synchronisation des noeuds est essentielle pour permettre la communication, la localisation, la détection de mouvement au sein d'un réseau. La plupart des systèmes de synchronisation font appel à la référence temporelle diffusée par le système GPS. Ce mode de synchronisation n'est toutefois pas envisageable lorsque le réseau est déployé, en tout ou partie, à l'intérieur d'un bâtiment (environnement *indoor*). En outre, les noeuds doivent pouvoir disposer de sources d'énergie suffisante pour pouvoir alimenter un récepteur GPS, ce qui n'est pas le cas dans un réseau WSN où l'autonomie en énergie est un problème critique, *a fortiori* si ces noeuds sont mobiles.

Plusieurs méthodes de synchronisation ont été proposées pour prendre en compte les spécificités des réseaux WSNs.

Le protocole de synchronisation RBS (*Reference Broadcast Synchronization*) fait appel à la diffusion d'un message jouant un rôle de balise temporelle (*beacon*) qui permet aux différents récepteurs de se synchroniser entre eux. Plus précisément, la balise ne contient pas elle-même d'information temporelle mais sert de référence temporelle aux différents récepteurs pour déterminer leurs décalages d'horloge respectifs. Cette méthode de synchronisation fait cependant l'hypothèse que les délais de propagation sont négligeables par rapport à la période d'horloge, ce qui n'est généralement pas le cas dans les réseaux WSN. En outre, le protocole de synchronisation RBS requiert un grand nombre d'échanges de messages entre noeuds, ce qui nécessite des ressources de calcul importantes pour des réseaux de grande taille et ralentit d'autant la convergence de la synchronisation. Plus précisément, pour un réseau de $N$ noeuds reliés deux à deux par un seul saut (single-hop network), le protocole de synchronisation RBS requiert l'échange de $O(N^2)$ messages entre les noeuds. On trouvera une description du protocole de synchronisation RBS dans l'article de J. Elson et al. intitulé « Fine-grained network time synchronization using reference broadcasts » publié dans Proc. of the 5th Symposium on Operating System Design and Implementation, OSDI'02, pages 147-143.

Une deuxième méthode de synchronisation connue sous l'acronyme TPSN (*Timing-sync Protocol for Sensor Networks*) est basée sur une synchronisation de type émetteur-récepteur, organisée selon un mode arborescent. Ce protocole comprend une première étape (*level discovery phase*), lancée lors du déploiement du réseau, qui attribue à chaque noeud un niveau dans une arborescence de synchronisation, et une seconde étape (*synchronization phase*) pendant laquelle les noeuds d'un niveau $i$ sont synchronisés avec les noeuds du niveau $i$-1, cette synchronisation se propageant du niveau 0 (noeud à la racine de l'arborescence) au dernier niveau. Le protocole TPSN permet une convergence de synchronisation plus rapide que le protocole RBS en raison du moindre nombre de messages à transmettre. Toutefois, ce protocole ne convient pas aux réseaux dont les noeuds sont très mobiles (l'arborescence devant alors être mise à jour très fréquemment) ou dont la topologie est dynamique (comme c'est le cas dans certains réseaux WSN) et conduit à une consommation d'énergie encore trop importante. Il convient également de noter que le protocole TPSN ne peut pas s'appliquer aux communications multi-sauts.

Enfin, le protocole de synchronisation FTSP (*Flooding Time Synchronization Protocol*) permet de synchroniser l'ensemble des noeuds du réseau à un noeud racine sans faire appel à une arborescence. Dans le protocole FTSP, le noeud racine transmet un message de synchronisation unique à une pluralité de noeuds du réseau. Ce message est horodaté à l'émission par le noeud source ainsi qu'à la réception par les autres noeuds de ladite pluralité. A partir de la valeur d'horodatage à l'émission (par le noeud racine) et de la valeur d'horodatage à sa réception, un noeud peut déterminer son décalage d'horloge par rapport au noeud racine. Les noeuds propagent les messages de synchronisation de proche en proche selon un schéma de routage *ad hoc.* L'avantage du protocole FSTP est de pouvoir être utilisé dans un réseau de topologie quelconque sans nécessiter de phase préalable d'organisation arborescente du réseau (*level discovery phase* du protocole TPSN). Toutefois, le noeud racine étant choisi périodiquement dans le réseau et le processus de synchronisation étant par conséquent à chaque fois répété, ce protocole entraine une consommation importante de ressources en énergie et en bande passante. Enfin, pas plus que le protocole TPSN, le protocole FSTP ne prend pas en compte les temps de propagation entre les noeuds du réseau.

Enfin, on connait de la demande internationale WO-A-2012/059903, un réseau UWB possédant un dispositif centralisé CLE (Central Location Engine) chargé de synchroniser des points d'accès ou APs (access points) par rapport à un point d'accès de référence. Toutefois, cette méthode de synchronisation suppose, d'une part, que le dispositif centralisé connaisse les temps de propagation entre les noeuds (points d'accès), ce qui est très contraignant lorsque les noeuds sont mobiles et, d'autre part, nécessite l'envoi régulier de messages de synchronisation, ce qui est pénalisant en termes de consommation d'énergie. Un exemple de l'art antérieur est décrit dans EP 3 021 129.

Le but de la présente invention est par conséquent de proposer une méthode de synchronisation dans un réseau WSN qui ne requière pas l'échange d'un grand nombre de messages, ne conduise pas à une consommation d'énergie importante par les noeuds du réseau et prenne en compte les temps de propagation entre noeuds sans en nécessiter la mesure préalable.

## EXPOSÉ DE L'INVENTION

La présente invention est définie par une méthode de synchronisation de noeuds au sein d'un réseau de capteurs, le réseau comprenant un premier noeud dit noeud de référence ($A_r$), pourvu d'une horloge de référence, et un ensemble de seconds noeuds ($A_i$) distincts du noeud de référence, chaque second noeud étant pourvu d'une horloge locale, ladite synchronisation étant effectuée lors de l'occurrence d'un évènement donné, observé à la fois par le noeud de référence et les seconds noeuds, dans laquelle :

(a) sur observation dudit événement, le noeud de référence diffuse un message de synchronisation après l'avoir horodaté au moment de son émission au moyen de l'horloge de référence pour fournir une première valeur d'horodatage ($t_r^{sync}$); et pour chaque second noeud :

(b) le message de synchronisation est reçu par ledit second noeud et horodaté par l'horloge locale de ce dernier au moment de sa réception pour fournir une deuxième valeur d'horodatage ($t_i^{sync}$);

(c) ledit second noeud répond au message de synchronisation reçu en transmettant au noeud de référence un message de réponse horodaté par son horloge locale au moment de son émission, pour fournir une troisième valeur d'horodatage ($t_i^{rep}$);

(d) le message de réponse du second noeud est reçu par le noeud de référence et horodaté par l'horloge de référence au moment de sa réception pour fournir une quatrième valeur d'horodatage ($t_{i,r}^{rep}$);

(e) on estime le temps ($t_{i,r}^{evt}$) auquel le second noeud a observé ledit événement, mesuré au moyen de l'horloge de référence, à partir de la première valeur d'horodatage, des deuxième troisième et quatrième valeurs d'horodatage associées au second noeud, et du temps ($t_i^{evt}$) auquel le second noeud a observé ledit événement, mesuré au moyen de son horloge locale.

Avantageusement, à l'étape (e) :

(e1) on détermine un temps de propagation ($\tau_{i,r}^{of}$) entre le noeud de référence et ledit second noeud à partir de la première valeur d'horodatage et des deuxième, troisième et quatrième valeurs d'horodatage associées au second noeud ;

(e2) on estime le temps ($t_{i,r}^{evt}$) auquel le second noeud a observé ledit événement, mesuré au moyen de l'horloge de référence, à partir de la première valeur d'horodatage, de la seconde valeur d'horodatage associée au second noeud, du temps de propagation ($\tau_{i,r}^{of}$) entre le noeud de référence et ledit second noeud, déterminé à l'étape (e1), et du temps ($t_i^{evt}$) auquel le second noeud a observé ledit événement, mesuré au moyen de son horloge locale.

Le temps de propagation $\tau_{i,r}^{of}$ entre le noeud de référence et ledit second noeud est avantageusement déterminé à l'étape (e1) par :

$$\tau_{i,r}^{of} = \frac{1}{2}\left( \left( t_{i,r}^{rep} - t_{r}^{sync} \right) - \frac{\left( t_{i}^{rep} - t_{i}^{sync} \right)}{\delta_{i,r}} \right)$$

où $t_{r}^{sync}$ et $t_{i}^{sync}$ , $t_{i}^{rep}$ , $t_{i,r}^{rep}$ sont respectivement la première valeur d'horodatage et les deuxième, troisième et quatrième valeurs d'horodatage associées au second noeud ($A_i$) et où $\delta_{i,r}$ est le rapport entre la fréquence de l'horloge locale du second noeud et la fréquence de l'horloge de référence.

De même, le temps $t_{i,r}^{evt}$ auquel le second noeud a observé ledit événement, peut être mesuré au moyen de l'horloge de référence est estimé à l'étape (e2) par :

$$t_{i,r}^{evt} = \left( t_{r}^{sync} + \tau_{i,r}^{of} \right) - \frac{\left( t_{i}^{sync} - t_{i}^{evt} \right)}{\delta_{i,r}}$$

où $t_{r}^{sync}$ est la première valeur d'horodatage, $t_{i}^{sync}$ est la seconde valeur d'horodatage associée au second noeud ($A_i$), $\tau_{i,r}^{of}$ est le temps de propagation entre le noeud de référence et le second noeud, $\delta_{i,r}$ est le rapport entre la fréquence de l'horloge locale du second noeud et la fréquence de l'horloge de référence, et $t_{i}^{evt}$ est le temps auquel le second noeud a observé ledit événement, mesuré au moyen de son horloge locale.

Le rapport $\delta_{i,r}$ entre la fréquence de l'horloge locale du second noeud et la fréquence de l'horloge de référence est avantageusement estimé par le noeud de référence à partir de la réception d'un préambule du message de réponse (*mes_rep_i*) du second noeud, ledit préambule contenant un séquence pilote prédéterminée.

De préférence, le message de réponse du second noeud (*mes_rep_i*) comprend comme arguments, le temps $t_{i}^{evt}$ auquel le second noeud a observé ledit événement, mesuré au moyen de son horloge locale, et les seconde et troisième valeurs d'horodatage $\left( t_{i}^{sync}, t_{i}^{rep} \right)$ associées au second noeud.

L'invention concerne en outre une méthode de localisation d'une étiquette au moyen d'un réseau de capteurs le réseau comprenant un premier noeud-ancre de position connue, dit ancre de référence ($A_r$), pourvu d'une horloge de référence, et un ensemble de seconds noeuds-ancres ($A_i$), de positions connues et distincts de l'ancre de référence, chaque second noeud-ancre étant pourvu d'une horloge locale, dans laquelle :

(a0) l'étiquette transmet un message de demande de synchronisation (*mes_clap*) ayant pour argument un identifiant ($Id_r$) de l'ancre de référence ($A_r$);

(a1) le message de demande de synchronisation est reçu par l'ancre de référence et par les seconds noeuds-ancres, l'ancre de référence mesurant le temps de réception ( $t_{r}^{evt}$ ) dudit message au moyen de l'horloge de référence et les seconds noeuds-ancres mesurant le temps de réception ($t_{i}^{evt}$) au moyen de leurs horloges locales respectives ;

(a2) sur réception du message de demande de synchronisation, l'ancre de référence diffuse un message de synchronisation après l'avoir horodaté au moment de son émission au moyen de l'horloge de référence pour fournir une première valeur d'horodatage ($t_{r}^{sync}$); et que pour chaque second noeud-ancre :

(b) le message de synchronisation est reçu par ledit second noeud-ancre et horodaté par l'horloge locale de ce dernier au moment de sa réception pour fournir une deuxième valeur d'horodatage ($t_{i}^{sync}$);

(c) ledit second noeud-ancre répond au message de synchronisation reçu en transmettant à l'ancre de référence un message de réponse horodaté par son horloge locale au moment de son émission, pour fournir une troisième valeur d'horodatage ($t_i^{rep}$) ;

(d) le message de réponse du second noeud-ancre est reçu par l'ancre de référence et horodaté par l'horloge de référence au moment de sa réception, pour fournir une quatrième valeur d'horodatage ($t_{i,r}^{rep}$) ;

(e) on estime le temps, $t_{i,r}^{evt}$, auquel le second noeud-ancre a reçu le message de demande de synchronisation, mesuré au moyen de l'horloge de référence, à partir de la première valeur d'horodatage, des deuxième troisième et quatrième valeurs d'horodatage associées au second noeud-ancre, et du temps ($t_i^{evt}$) auquel le second noeud-ancre a reçu le message de demande de synchronisation, mesuré au moyen de son horloge locale ; et que

(f1) on calcule les différences de temps d'arrivée $t_{i,r}^{evt} - t_r^{evt}$ pour l'ensemble des seconds noeuds-ancres, où $t_r^{evt}$ est le temps de réception du message de demande de synchronisation, mesuré au moyen de l'horloge de référence ; et

(f2) on déduit desdites différences de temps d'arrivée la position de l'étiquette.

Selon une première variante, les étapes (e), (f1) et (f2) sont réalisées par l'ancre de référence.

Selon une seconde variante, les étapes (e) et (f1) sont réalisées par l'ancre de référence et que celle-ci transmet à un serveur distant les différences de temps d'arrivée $t_{i,r}^{evt} - t_r^{evt}$ pour l'ensemble des seconds noeuds-ancres, ledit serveur effectuant alors l'étape (f2) à partir de ces dernières.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 illustre schématiquement un exemple de réseau WSN dans lequel la méthode de synchronisation de noeuds selon l'invention peut être mise en oeuvre ;

La Fig. 2 représente schématiquement un ordinogramme de la méthode de synchronisation de noeuds dans un réseau WSN selon un mode de réalisation de l'invention ;

La Fig. 3 représente schématiquement un chronogramme de la méthode de synchronisation de la Fig. 2 pour la localisation d'une étiquette dans le réseau WSN de la Fig. 1.

## EXPOSÉ DÉTAILLÉ DE MODES DE RÉALISATION PARTICULIERS

Nous considérerons dans la suite un réseau WSN, par exemple un réseau obéissant au protocole de communication IEEE 802.15.4, tel qu'un réseau ZigBee™ ou 6LoWPAN™. La couche physique du réseau est de préférence un système de communication UWB (Ultra Wide Band) de type impulsionnel. Dans le cas d'une application de type *indoor*, on choisira avantageusement une résolution temporelle des impulsions UWB de l'ordre de la picoseconde.

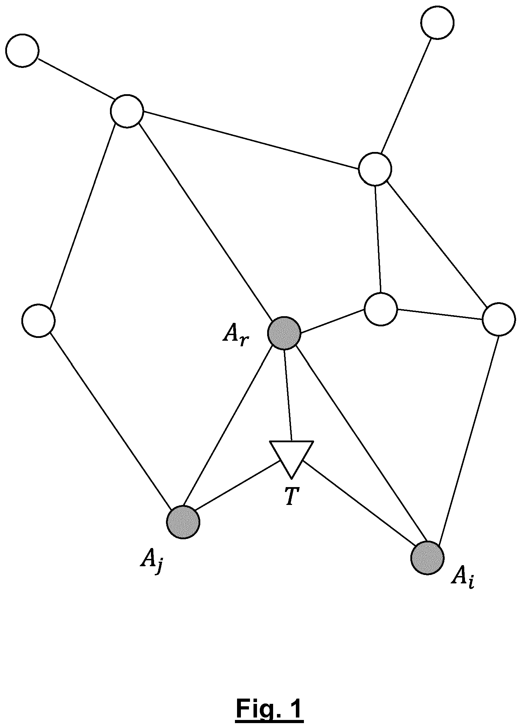

Un contexte d'application de la présente invention est celui de la localisation d'une étiquette (*tag*) dans un réseau de capteurs sans fil, comme illustré schématiquement en Fig. 1.

Le réseau de capteurs présente une topologie quelconque et comporte une pluralité de noeuds-ancres (ou ancres) au sens défini plus haut, notés $A_1,...,A_N$. Ces noeuds-ancres constituent un sous-ensemble de l'ensemble des noeuds du réseau et permettent de localiser des noeuds mobiles tels que des étiquettes (*tags*) dont les positions sont *a priori* inconnues. Une étiquette (*tag*), $T$, est reliée à l'infrastructure par des liaisons radio, voire optiques. Les ancres à la portée de l'étiquette $T$ ont été représentées en grisé sur la Fig. 1. De préférence, les liaisons entre l'étiquette et l'infrastructure utilisent une communication de type UWB impulsionnel (celles entre noeuds de l'infrastructure). Alternativement, on pourra prévoir des liaisons optiques, la communication sur ces liaisons se faisant au moyen d'impulsions lumineuses de très courte durée. Dans ce cas, on comprendra que les noeuds-ancre seront équipés à la fois d'une interface de commuication UWB et d'une interface de communication optique.

Quel que soit le type de communication envisagé, nous supposerons dans la suite que l'étiquette $T$ est associée à une ancre de référence du réseau, notée $A_r$. Cette ancre de référence est une ancre du réseau à la portée de l'étiquette $T$ (autrement dit à un saut de cette étiquette), et capable d'échanger avec elle des messages sur une liaison radio.

Cette ancre de référence est par exemple choisie au terme d'un processus d'association comme celui défini dans la norme IEEE 802.15.4.

L'étiquette $T$ émet périodiquement ou ponctuellement (en mode broadcast) des messages de demande de localisation (encore dénommés ci-après messages *claps*). Après l'émission de chaque message clap, *mes_clap*, l'étiquette passe en mode veille (*sleep mode*) pour réduire sa consommation d'énergie. En d'autres termes, l'étiquette est par défaut en mode veille et se réveille périodiquement pour émettre une demande de localisation. Les messages claps contiennent chacun un identifiant, $Id_r$, de l'ancre de référence, $A_r$. Le cas échéant, les messages claps peuvent également contenir un identifiant de l'étiquette, afin de permettre la localisation simultanée de différentes étiquettes associées à une même ancre de référence. Les identifiants peuvent être par exemple les adresses MAC ou des valeurs de hachage de ces adresses.

Les messages claps sont reçus par l'ancre de référence (par exemple, ancre $A_r$ en Fig. 1) ainsi que par une pluralité d'autres ancres à portée de l'étiquette $T$ (par exemple, ancres $A_i$, $A_j$ en Fig. 1). Sur réception d'un message clap, l'ancre de référence diffuse un message de synchronisation permettant d'effectuer une synchronisation des ancres voisines avec l'ancre de référence, comme expliqué ci-après.

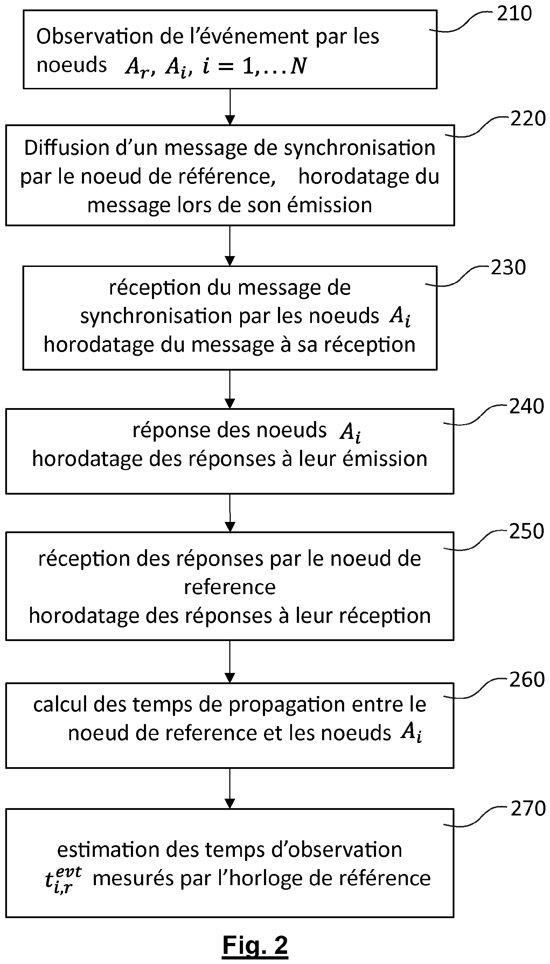

La Fig. 2 représente de manière schématique un ordinogramme d'une méthode de synchronisation de noeuds dans un réseau WSN selon un mode de réalisation de l'invention.

Selon un principe à la base de l'invention, on réalise une synchronisation *post facto* au sens où la synchronisation des noeuds est effectuée ponctuellement, lorsqu'un évènement survient. La majeure partie du temps, les noeuds ne sont généralement pas synchronisés en raison de la dérive de leurs horloges locales par rapport à une horloge de référence. Ce type de synchronisation « à la demande » est particulièrement économe en énergie et en nombre de messages échangés entre les noeuds, et donc particulièrement bien adapté aux réseaux WSN.

L'évènement déclenchant la synchronisation des noeuds peut être l'envoi d'un message, par exemple d'un message de clap dans le contexte de la Fig. 1, ou plus généralement la détection d'un phénomène physique comme le franchissement d'un seuil par une grandeur physique, voire encore la satisfaction d'une condition logique. De nombreux types d'évènements pourront être envisagés par l'homme du métier en fonction du domaine d'application souhaité, sans pour autant sortir du cadre de la présente invention.

L'évènement en question est observé en 210 par un noeud de référence, $A_r$, dont l'horloge locale est prise conventionnellement comme horloge de référence, et une pluralité de noeuds de réseau, chacun disposant de sa propre horloge locale. On suppose que le noeud de référence $A_r$ observe cet évènement à l'instant $t_r^{evt}$ et que les autres noeuds du réseau, $A_i$, $i$=1,...,$N$ observent cet évènement aux instants $t_i^{evt}$, $i$=1,...,$N$. On comprendra que chaque temps $t_r^{evt}$, $t_i^{evt}$, $i$=1,...,$N$ est mesuré au moyen de l'horloge locale du noeud qui observe l'évènement. Ces valeurs sont stockées localement par les noeuds qui ont respectivement effectué lesdites observations.

Suite à l'observation de l'évènement à l'instant $t_r^{evt}$, le noeud de référence chargé de la synchronisation diffuse un message de synchronisation, *mes_sync* à l'étape 220. Ce message est horodaté au moment de son émission par le noeud de référence $A_r$. Par horodatage, on entend ici l'acquisition d'un temps au moyen de l'horloge locale. La valeur d'horodatage ou estampille temporelle, notée $t_r^{sync}$ est stockée localement dans le noeud de référence. On pourra prévoir que, lors de la réception de *mes_sync,* le noeud de référence fixe un instant d'émission $t_r^{sync} > t_r^{evt}$ compatible avec le temps de traitement du noeud de référence et que l'émission est déclenchée à l'instant $t_r^{sync}$ ainsi fixé.

A l'étape 230, chacun des noeuds $A_i$, $i$=1,...,$N$, reçoit le message de synchronisation et effectue un horodatage de ce message à l'instant où il le reçoit. On note $t_i^{sync}$ la valeur d'horodatage ainsi obtenue pour le noeud $A_i$. Cette valeur est stockée localement dans le noeud $A_i$.

A l'étape 240, chacun des noeuds $A_i$ répond au noeud de référence en lui retournant un message de réponse, *mes_rep_i*. Ce message incorpore le temps $t_i^{evt}$ ainsi que les valeurs d'horodatage $t_i^{sync}$ et $t_i^{rep}$ où $t_i^{rep}$ est une valeur d'horodatage correspondant à l'instant d'émission du message de réponse *mes_rep_i*. Comme pour le noeud de référence, le noeud $A_i$ pourra fixer préalablement un instant d'émission $t_i^{rep} > t_i^{sync}$ pour tenir compte du temps de traitement, le message de réponse étant alors envoyé à l'instant $t_i^{rep}$ ainsi fixé.

A l'étape 250, le noeud de référence $A_r$ reçoit les messages *mes_rep_i* au fur et à mesure et en effectue un horodatage aux instants où il les reçoit. Les valeurs d'horodatage ainsi obtenues sont notées $t_{i,r}^{rep}$.

A l'étape 260, le noeud de référence $A_r$ détermine à partir des valeurs d'horodatage $t_r^{sync}$, $t_i^{sync}$, $t_i^{rep}$, $t_{i,r}^{rep}$ obtenues précédemment, le temps de propagation (ou temps de vol) $\tau_{i,r}^{of}$ entre le noeud de référence et le noeud $A_i$, ce pour chacun des noeuds $A_i$, $i=1,...,N$.

Pour déterminer le temps de propagation $\tau_{i,r}^{of}$, le noeud de référence estime d'abord la dérive en fréquence (*frequency drift*) entre l'horloge du noeud $A_i$ et l'horloge de référence, soit $\delta_{i,r} = \dfrac{f_i}{f_r}$ où $f_i$ est la fréquence de l'horloge du noeud $A_i$ et $f_r$ est la fréquence de référence.

La dérive en fréquence peut être estimée en insérant dans un préambule des messages *mes_rep_i* une séquence pilote prédéterminée. La boucle de poursuite en fréquence du récepteur équipant le noeud de référence permet alors de déterminer le décalage en fréquence $f_i - f_r$ ou le décalage relatif en fréquence $\dfrac{f_i - f_r}{f_r}$ de l'horloge ayant servi à moduler la séquence par rapport à l'horloge de référence servant à la démoduler. La dérive en fréquence $\delta_{i,r}$ se déduit du décalage / décalage relatif en fréquence. Par exemple lorsque la modulation est de type UWB, la dérive en fréquence pourra être obtenue au moyen d'un récepteur UWB du type décrit dans la demande WO-A-2014/060277.

Le noeud de référence $A_r$ détermine ensuite le temps de propagation $\tau_{i,r}^{of}$ à partir de :

$$\tau_{i,r}^{of} = \frac{1}{2}\left( \left( t_{i,r}^{rep} - t_r^{sync} \right) - \frac{\left( t_i^{rep} - t_i^{sync} \right)}{\delta_{i,r}} \right) \qquad (1)$$

A l'étape 270, le noeud de référence $A_r$ estime les temps, $t_{i,r}^{evt}$ auxquels l'évènement a été observé par les noeuds $A_i$, mesurés au moyen de l'horloge de référence, soit :

$$t_{i,r}^{evt} = \left( t_r^{sync} + \tau_{i,r}^{of} \right) - \frac{\left( t_i^{sync} - t_i^{evt} \right)}{\delta_{i,r}} \qquad (2)$$

Le premier terme de l'expression (2) correspond à l'instant de réception du message de synchronisation *mes_sync* par le noeud $A_i$, mesuré avec l'horloge de référence et le second terme correspond à la différence de temps entre l'observation de l'évènement par le noeud $A_i$ et la réception du message de synchronisation, également mesurée au moyen de l'horloge de référence.

Ainsi, les instants d'observation de l'évènement, correspondant à des temps $t_i^{evt}$, mesurés au moyen des horloges locales des noeuds, peuvent être tous mesurés au moyen d'une horloge de référence commune au prix de l'échange de $O(N)$ messages dans le réseau.

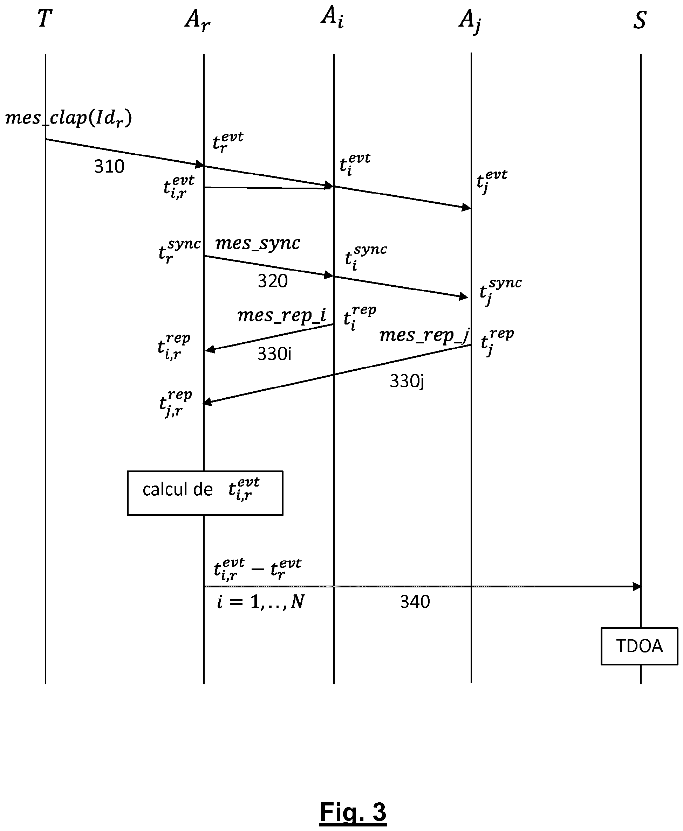

La Fig. 3 illustre de manière schématique un chronogramme de la méthode de synchronisation de la Fig. 2 dans le cas de la localisation d'une étiquette au moyen du réseau WSN de la Fig. 1.

On rappelle que l'on souhaite localiser une étiquette $T$ au moyen d'un réseau WSN comportant une pluralité de noeuds ancres $A_r$, $A_i$, $i=1,..,N$, l'ancre $A_r$ jouant le rôle d'ancre de référence.

On a représenté sur la Fig. 3, l'étiquette $T$, l'ancre de référence $A_r$ ainsi que deux ancres $A_i$ et $A_j$ voisines de l'étiquette $T$ et distinctes de l'ancre de référence. La description des échanges de messages est donnée ci-après pour l'ancre $A_i$ mais il est clair qu'elle s'applique de manière similaire à l'ancre $A_j$.

En 310, l'étiquette $T$ émet un message clap, *mes_clap(Id_r)* où $Id_r$ est l'identifiant de l'ancre de référence. Le cas échéant, le message clap pourra contenir un identifiant de l'étiquette, comme décrit plus haut, de manière à permettre la localisation simultanée de différentes étiquettes associées à la même ancre de référence.

L'ancre de référence, $A_r$, reçoit ce message de clap à un instant de réception correspondant à un temps $t_r^{evt}$, mesuré au moyen de l'horloge de référence. De même, le message de clap est reçu à un instant de réception correspondant à un temps $t_i^{evt}$ mesuré au moyen de l'horloge locale de l'ancre $A_i$.

L'ancre $A_r$ déduit de l'identifiant $Id_r$ qu'elle est ancre de référence pour l'étiquette $\mathcal{T}$ et diffuse (*broadcast mode*) en 320 un message *mes_sync*. Ce message est horodaté au moment de son émission. La valeur d'horodatage (dite également estampille temporelle), $t_r^{sync}$, est stockée localement par le noeud de référence. Comme précédemment, on pourra préalablement fixer l'instant d'émission à $t_r^{sync} > t_r^{evt}$ et déclencher l'émission à l'instant $t_r^{sync}$ ainsi fixé.

Ce message de synchronisation est reçu par l'ancre $A_i$ et est horodaté à l'instant de sa réception. La valeur d'horodatage ainsi obtenue est notée $t_i^{sync}$. L'ancre $A_i$ renvoie en 330i une réponse, *mes_rep_i,* à l'ancre de référence (identifiée grâce à son identifiant $Id_r$). Cette réponse contient comme arguments $t_i^{evt}$, $t_i^{sync}$ et $t_i^{rep}$ où $t_i^{rep}$ est la valeur d'horodatage de l'ancre $A_i$ correspondant à l'instant d'émission du message *mes_rep_i.*

L'ancre de référence, $A_r$, reçoit cette réponse et effectue un horodatage de l'instant où elle la reçoit. Soit $t_{i,r}^{rep}$ cette valeur d'horodatage.

L'ancre de référence estime ensuite au moyen de l'expression (1) le temps de propagation $\tau_{i,r}^{of}$ à partir des valeurs d'horodatage $t_r^{sync}$, $t_i^{sync}$, $t_i^{rep}$, $t_{i,r}^{rep}$, et en déduit au moyen de l'expression (2), le temps $t_{i,r}^{evt}$ auquel l'ancre $A_i$ a reçu le message clap, mesuré au moyen de l'horloge de référence.

On comprendra que les échanges 320 et 330 ont lieu avec toutes les ancres du réseau ayant reçu le message clap et le message de synchronisation. Ainsi, l'ancre de référence dispose des temps $t_{i,r}^{evt}$ relatifs aux ancres $A_i$, $i=1,..,N$. En d'autres termes, les ancres $A_i$, $i=1,..,N$ sont synchronisées *a posteriori* (ou *post facto*) avec l'ancre de référence $A_r$.

L'ancre de référence peut ensuite calculer les différences de temps d'arrivée $t_{i,r}^{evt} - t_r^{evt}$ et en déduire la position de l'étiquette $\mathcal{T}$ à partir d'une méthode de localisation TDOA (*Time Difference Of Arrival*) connue en soi.

Alternativement, l'ancre de référence peut transmettre les temps d'arrivée $t_r^{evt}$ ; $t_{i,r}^{evt}$, $i=1,..,N$, voire les différences de temps d'arrivée $t_{i,r}^{evt} - t_r^{evt}$ (comme illustré sur la Fig. 3) à un serveur distant $S$ qui effectue alors le calcul de position selon la méthode TDOA et pourra envoyer le résultat, le cas échéant, aux noeuds intéressés.

On comprendra que $N=2$ ancres en sus de l'ancre de référence permettent de localiser une étiquette dans le plan et que $N=3$ ancres permettent de la localiser dans l'espace. En pratique, on pourra bien entendu utiliser un nombre $N$ supérieur à ces minima pour améliorer la précision de localisation de l'étiquette.

**Revendications**

1. Méthode de synchronisation de noeuds au sein d'un réseau de capteurs, le réseau comprenant un premier noeud dit noeud de référence ($A_r$), pourvu d'une horloge de référence, et un ensemble de seconds noeuds ($A_i$) distincts du noeud de référence, chaque second noeud étant pourvu d'une horloge locale, ladite synchronisation étant effectuée lors de l'occurrence d'un évènement donné, observé à la fois par le noeud de référence et les seconds noeuds, comprenant les étapes suivantes :

   (a) sur observation dudit évènement (210), le noeud de référence diffuse (220) un message de synchronisation après l'avoir horodaté au moment de son émission au moyen de l'horloge de référence pour fournir une première valeur d'horodatage ($t_r^{sync}$);

   et pour chaque second noeud :

   (b) le message de synchronisation est reçu par ledit second noeud et horodaté par l'horloge locale de ce dernier au moment de sa réception (230) pour fournir une deuxième valeur d'horodatage $(t_i^{sync})$; ladite méthode étant **caractérisée en ce que**:

(c) ledit second noeud répond au message de synchronisation reçu en transmettant au noeud de référence un message de réponse horodaté par son horloge locale au moment de son émission (240), pour fournir une troisième valeur d'horodatage $(t_i^{rep})$;

(d) le message de réponse du second noeud est reçu par le noeud de référence et horodaté par l'horloge de référence au moment de sa réception (250) pour fournir une quatrième valeur d'horodatage $(t_{i,r}^{rep})$;

(e) on estime (260, 270) le temps $(t_{i,r}^{evt})$ auquel le second noeud a observé ledit évènement, mesuré au moyen de l'horloge de référence, à partir de la première valeur d'horodatage, des deuxième troisième et quatrième valeurs d'horodatage associées au second noeud, et du temps $(t_i^{evt})$ auquel le second noeud a observé ledit événement, mesuré au moyen de son horloge locale.

2. Méthode de synchronisation de noeuds selon la revendication 1, **caractérisée en ce qu'**à l'étape (e) :

(e1) on détermine (260) un temps de propagation $(\tau_{i,r}^{of})$ entre le noeud de référence et ledit second noeud à partir de la première valeur d'horodatage et des deuxième, troisième et quatrième valeurs d'horodatage associées au second noeud ;

(e2) on estime (270) le temps $(t_{i,r}^{evt})$ auquel le second noeud a observé ledit événement, mesuré au moyen de l'horloge de référence, à partir de la première valeur d'horodatage, de la seconde valeur d'horodatage associée au second noeud, du temps de propagation $(\tau_{i,r}^{of})$ entre le noeud de référence et ledit second noeud, déterminé à l'étape (e1), et du temps $(t_i^{evt})$ auquel le second noeud a observé ledit évènement, mesuré au moyen de son horloge locale.

3. Méthode de synchronisation de noeuds selon la revendication 2, **caractérisée en ce que** le temps de propagation $\tau_{i,r}^{of}$ entre le noeud de référence et ledit second noeud est déterminé à l'étape (e1) par :

$$\tau_{i,r}^{of} = \frac{1}{2}\left( \left(t_{i,r}^{rep} - t_r^{sync}\right) - \frac{\left(t_i^{rep} - t_i^{sync}\right)}{\delta_{i,r}} \right)$$

où $t_r^{sync}$ et $t_i^{sync}$, $t_i^{rep}$, $t_{i,r}^{rep}$ sont respectivement la première valeur d'horodatage et les deuxième, troisième et quatrième valeurs d'horodatage associées au second noeud ($A_i$) et où $\delta_{i,r}$ est le rapport entre la fréquence de l'horloge locale du second noeud et la fréquence de l'horloge de référence.

4. Méthode de synchronisation de noeuds selon la revendication 2 ou 3, **caractérisée en ce que** le temps $t_{i,r}^{evt}$ auquel le second noeud a observé ledit évènement, mesuré au moyen de l'horloge de référence est estimé à l'étape (e2) par :

$$t_{i,r}^{evt} = \left(t_r^{sync} + \tau_{i,r}^{of}\right) - \frac{\left(t_i^{sync} - t_i^{evt}\right)}{\delta_{i,r}}$$

où $t_r^{sync}$ est la première valeur d'horodatage, $t_i^{sync}$ est la seconde valeur d'horodatage associée au second noeud ($A_i$, $\tau_{i,r}^{of}$ est le temps de propagation entre le noeud de référence et le second noeud, $\delta_{i,r}$ est le rapport entre la fréquence de l'horloge locale du second noeud et la fréquence de l'horloge de référence, et $t_i^{evt}$ est le temps auquel le second noeud a observé ledit évènement, mesuré au moyen de son horloge locale.

**5.** Méthode de synchronisation de noeuds selon l'une des revendications 3 ou 4, **caractérisée en ce que** le rapport $\delta_{i,r}$ entre la fréquence de l'horloge locale du second noeud et la fréquence de l'horloge de référence est estimé par le noeud de référence à partir de la réception d'un préambule du message de réponse (*mes_rep_i*) du second noeud, ledit préambule contenant une séquence pilote prédéterminée.

**6.** Méthode de synchronisation de noeud selon l'une des revendications précédentes, **caractérisée en ce que** le message de réponse du second noeud (*mes_rep_i*) comprend comme arguments, le temps $t_i^{evt}$ auquel le second noeud a observé ledit évènement, mesuré au moyen de son horloge locale, et les seconde et troisième valeurs d'horodatage ($t_i^{sync}$, $t_i^{rep}$) associées au second noeud.

**7.** Méthode de localisation d'une étiquette au moyen d'un réseau de capteurs, le réseau comprenant un premier noeud-ancre de position connue, dit ancre de référence ($A_r$), pourvu d'une horloge de référence, et un ensemble de seconds noeuds-ancres ($A_i$), de positions connues et distincts de l'ancre de référence, chaque second noeud-ancre étant pourvu d'une horloge locale, comprenant les étapes suivantes :

(a0) l'étiquette transmet un message de demande de synchronisation (*mes_clap*) ayant pour argument un identifiant ($Id_r$) de l'ancre de référence ($A_r$);

(a1) le message de demande de synchronisation est reçu par l'ancre de référence et par les seconds noeuds-ancres, l'ancre de référence mesurant le temps de réception ($t_r^{evt}$) dudit message au moyen de l'horloge de référence et les seconds noeuds-ancres mesurant le temps de réception ($t_i^{evt}$) au moyen de leurs horloges locales respectives ;

(a2) sur réception du message de demande de synchronisation (210), l'ancre de référence diffuse (220) un message de synchronisation après l'avoir horodaté au moment de son émission au moyen de l'horloge de référence pour fournir une première valeur d'horodatage ($t_r^{sync}$); et que pour chaque second noeud-ancre :

(b) le message de synchronisation est reçu par ledit second noeud-ancre et horodaté par l'horloge locale de ce dernier au moment de sa réception (230) pour fournir une deuxième valeur d'horodatage ($t_i^{sync}$);

(c) ledit second noeud-ancre répond au message de synchronisation reçu en transmettant à l'ancre de référence un message de réponse horodaté par son horloge locale au moment de son émission (240), pour fournir une troisième valeur d'horodatage ($t_i^{rep}$); ladite méthode étant **caractérisée en ce que**:

(d) le message de réponse du second noeud-ancre est reçu par l'ancre de référence et horodaté par l'horloge de référence au moment de sa réception (250) pour fournir une quatrième valeur d'horodatage ($t_{i,r}^{rep}$);

(e) on estime (260, 270) le temps, $t_{i,r}^{evt}$, auquel le second noeud-ancre a reçu le message de demande de synchronisation, mesuré au moyen de l'horloge de référence, à partir de la première valeur d'horodatage, des deuxième troisième et quatrième valeurs d'horodatage associées au second noeud-ancre, et du temps ($t_i^{evt}$) auquel le second noeud-ancre a reçu le message de demande de synchronisation, mesuré au moyen de son horloge locale ; et que

(f1) on calcule les différences de temps d'arrivée $t_{i,r}^{evt} - t_r^{evt}$ pour l'ensemble des seconds noeuds-ancres, où $t_r^{evt}$ est le temps de réception du message de demande de synchronisation, mesuré au moyen de l'horloge de référence ; et

(f2) on déduit desdites différences de temps d'arrivée la position de l'étiquette.

**8.** Méthode de localisation d'une étiquette au moyen d'un réseau de capteurs selon la revendication 7, **caractérisée en ce que** les étapes (e), (f1) et (f2) sont réalisées par l'ancre de référence.

**9.** Méthode de localisation d'une étiquette au moyen d'un réseau de capteurs selon la revendication 7, **caractérisée**

**en ce que** les étapes (e) et (f1) sont réalisées par l'ancre de référence et que celle-ci transmet à un serveur distant les différences de temps d'arrivée $t_{i,r}^{evt} - t_r^{evt}$ pour l'ensemble des seconds noeuds-ancres, ledit serveur effectuant alors l'étape (f2) à partir de ces dernières.

## Patentansprüche

1. Verfahren zum Synchronisieren von Knoten innerhalb eines Sensornetzwerks, wobei das Netzwerk einen ersten Knoten, Referenzknoten ($A_r$) genannt, der mit einem Referenztaktgeber versehen ist, und eine Einheit aus zweiten Knoten ($A_i$) aufweist, die von dem Referenzknoten separat vorliegen, wobei jeder zweite Knoten mit einem lokalen Taktgeber versehen ist, wobei die Synchronisation bei Auftreten eines gegebenen Ereignisses erfolgt, das zugleich vom Referenzknoten und von den zweiten Knoten festgestellt wird, umfassend die folgenden Schritte:

   (a) bei Feststellung des Ereignisses (210) sendet (220) der Referenzknoten eine Synchronisationsnachricht, nachdem er zum Zeitpunkt ihres Versendens mittels des Referenztaktgebers einen Zeitstempel erhalten hat, um einen ersten Zeitstempelwert ($t_r^{sync}$) bereitzustellen,

   wobei bei jedem zweiten Knoten

   (b) die Synchronisationsnachricht von dem zweiten Knoten empfangen und zum Zeitpunkt ihres Empfangs (230) von dem lokalen Taktgeber desselben mit einem Zeitstempel versehen wird, um einen zweiten Zeitstempelwert ($t_i^{sync}$) bereitzustellen,
   wobei das Verfahren **dadurch gekennzeichnet ist, dass**
   (c) der zweite Knoten auf die empfangene Synchronisationsnachricht antwortet, indem er dem Referenzknoten eine Antwortnachricht überträgt, die von seinem lokalen Taktgeber zum Zeitpunkt ihres Versendens (240) mit einem Zeitstempel versehen wird, um einen dritten Zeitstempelwert ($t_i^{rep}$) bereitzustellen;
   (d) die Antwortnachricht des zweiten Knotens von dem Referenzknoten empfangen und von dem Referenztaktgeber zum Zeitpunkt ihres Empfangs (250) mit einem Zeitstempel versehen wird, um einen vierten Zeitstempelwert ($t_{i,r}^{rep}$) bereitzustellen;
   (e) die Zeit ($t_{i,r}^{evt}$) geschätzt wird (260, 270), zu welcher der zweite Knoten das Ereignis festgestellt hat und die mittels des Referenztaktgebers gemessen wird, und zwar ausgehend von dem ersten Zeitstempelwert und dem dem zweiten Knoten zugeordneten zweiten, dritten und vierten Zeitstempelwert und von der Zeit ($t_i^{evt}$), zu welcher der zweite Knoten das Ereignis festgestellt hat und die mittels seines lokalen Taktgebers gemessen wird.

2. Verfahren zum Synchronisieren von Knoten nach Anspruch 1, **dadurch gekennzeichnet, dass** in Schritt (e)
   (e1) eine Laufzeit ($\tau_{i,r}^{of}$) zwischen dem Referenzknoten und dem zweiten Knoten ausgehend von dem ersten Zeitstempelwert und dem dem zweiten Knoten zugeordneten zweiten, dritten und vierten Zeitstempelwert bestimmt wird (260);
   (e2) die Zeit ($t_{i,r}^{evt}$) geschätzt wird (270), zu der der zweite Knoten das Ereignis festgestellt hat und die mittels des Referenztaktgebers gemessen wird, und zwar ausgehend von dem ersten Zeitstempelwert, dem dem zweiten Knoten zugeordneten zweiten Zeitstempelwert, der in Schritt (e1) bestimmten Laufzeit ($\tau_{i,r}^{of}$) zwischen dem Referenzknoten und dem zweiten Knoten, und der Zeit ($t_i^{evt}$), zu der der zweite Knoten das Ereignis festgestellt hat und die mittels seines lokalen Taktgebers gemessen wird.

3. Verfahren zum Synchronisieren von Knoten nach Anspruch 2, **dadurch gekennzeichnet, dass** die Laufzeit $\tau_{i,r}^{of}$ zwischen dem Referenzknoten und dem zweiten Knoten in Schritt (e1) bestimmt wird durch

$$\tau_{i,r}^{of} = \frac{1}{2}\left( \left( t_{i,r}^{rep} - t_r^{sync} \right) - \frac{(t_i^{rep} - t_i^{sync})}{\delta_{i,r}} \right)$$

worin $t_r^{sync}$ und $t_i^{sync}$, $t_i^{rep}$, $t_{i,r}^{rep}$ jeweils der erste Zeitstempelwert und der dem zweiten Knoten ($A_i$) zugeordneten zweite, dritte und vierte Zeitstempelwert ist und worin $\delta_{i,r}$ das Verhältnis zwischen der Frequenz des lokalen Taktgebers des zweiten Knotens und der Frequenz des Referenztaktgebers ist.

4. Verfahren zum Synchronisieren von Knoten nach Anspruch 2 oder 3, **dadurch gekennzeichnet, dass** die Zeit $t_{i,r}^{evt}$, zu welcher der zweite Knoten das Ereignis festgestellt hat und die mittels des Referenztaktgebers gemessen wird, in Schritt (e2) geschätzt wird mit:

$$t_{i,r}^{evt} = (t_i^{sync} + \tau_{i,r}^{of}) - \frac{(t_i^{sync} - t_i^{evt})}{\delta_{i,r}}$$

worin $t_r^{sync}$ der erste Zeitstempelwert ist, $t_i^{sync}$ der dem zweiten Knoten ($A_i$) zugeordnete zweite Zeitstempelwert ist, $\tau_{i,r}^{of}$ die Laufzeit zwischen dem Referenzknoten und dem zweiten Knoten ist, $\delta_{i,r}$ das Verhältnis zwischen der Frequenz des lokalen Taktgebers des zweiten Knotens und der Frequenz des Referenztaktgebers ist, und $t_i^{evt}$ die Zeit ist, zu der der zweite Knoten das Ereignis festgestellt hat und die mittels seines lokalen Taktgebers gemessen wird.

5. Verfahren zum Synchronisieren von Knoten nach einem der Ansprüche 3 oder 4, **dadurch gekennzeichnet, dass** das Verhältnis $\delta_{i,r}$ zwischen der Frequenz des lokalen Taktgebers des zweiten Knotens und der Frequenz des Referenztaktgebers ausgehend von dem Empfang einer Präambel der Antwortnachricht (*mes_rep_i*) des zweiten Knoten ist von dem Referenzknoten geschätzt wird, wobei die Präambel eine vorbestimmte Pilotsequenz enthält.

6. Verfahren zum Synchronisieren von Knoten nach einem der vorangehenden Ansprüche, **dadurch gekennzeichnet, dass** die Antwortnachricht (*mes_rep_i*) des zweiten Knotens als Argumente die Zeit $t_i^{evt}$ umfasst, zu der der zweite Knoten das Ereignis festgestellt hat und die mittels seines lokalen Taktgebers gemessen wird, sowie den dem zweiten Knoten zugeordneten zweiten und dritten Zeitstempelwert $(t_i^{sync}, t_i^{rep})$.

7. Verfahren zum Lokalisieren eines Etiketts mittels eines Sensornetzwerks, wobei das Netzwerk einen ersten Anker-knoten bekannter Position, Referenzanker ($A_r$) genannt, aufweist, der mit einem Referenztaktgeber versehen ist, sowie eine Einheit aus zweiten Ankerknoten ($A_1$) bekannter Positionen versehen ist, die von dem Referenzanker separat vorliegen, wobei die zweiten Ankerknoten jeweils mit einem lokalen Taktgeber versehen sind, umfassend die nachfolgenden Schritte:

(a0) mit dem Etikett wird eine Synchronisationsanforderungsnachricht (*mes_clap*) übertragen, die als Argument eine Kennung (*Id_r*) des Referenzankers ($A_r$) umfasst;
(a1) die Synchronisationsanforderungsnachricht wird von dem Referenzanker und den zweiten Ankerknoten empfangen, wobei der Referenzanker die Empfangszeit $(t_r^{evt})$ der Nachricht mittels des Referenztaktgebers misst und die zweiten Ankerknoten die Empfangszeit $(t_i^{evt})$ mittels ihrer jeweiligen lokalen Taktgeber messen;
(a2) bei Empfang der Synchronisationsanforderungsnachricht (210) sendet (220) der Referenzanker eine Synchronisationsnachricht, nachdem er sie zum Zeitpunkt ihres Versendens mittels des Referenztaktgebers mit einem Zeitstempel versehen hat, um einen ersten Zeitstempelwert $(t_r^{synch})$ bereitzustellen;
wobei jeweils bei den zweiten Ankerknoten

(b) die Synchronisationsnachricht von dem zweiten Ankerknoten empfangen wird und von dem lokalen Taktgeber des letztgenannten zum Zeitpunkt ihres Empfangs (230) mit einem Zeitstempel versehen wird, um einen zweiten Zeitstempelwert $\left(t_i^{sync}\right)$ bereitzustellen;

(c) der zweite Ankerknoten auf die empfangene Synchronisationsnachricht antwortet, indem er dem Referenzanker eine Antwortnachricht überträgt, die zum Zeitpunkt ihres Versendens (240) von seinem lokalen Taktgeber mit einem Zeitstempel versehen wird, um einen dritten Zeitstempelwert $\left(t_i^{rep}\right)$ bereitzustellen,

wobei das Verfahren **dadurch gekennzeichnet ist, dass**

(d) die Antwortnachricht des zweiten Ankerknotens von dem Referenzanker empfangen wird und von dem Referenztaktgeber zum Zeitpunkt ihres Empfangs (250) mit einem Zeitstempel versehen wird, um einen vierten Zeitstempelwert $\left(t_{i,r}^{rep}\right)$ bereitzustellen;

(e) die Zeit $t_{i,r}^{evt}$ geschätzt wird (260, 270), zu der der zweite Ankerknoten die Synchronisationsanforderungsnachricht empfangen hat und die mittels des Referenztaktgebers gemessen wird, und zwar ausgehend von dem ersten Zeitstempelwert, den dem zweiten Ankerknoten zugeordneten zweiten, dritten und vierten Zeitstempelwert und von der Zeit $\left(t_i^{evt}\right)$, zu der der zweite Ankerknoten die Synchronisationsanforderungsnachricht empfangen hat und die mittels seines lokalen Taktgebers gemessen wird; und dass

(f1) die Ankunftszeitdifferenzen $t_{i,r}^{evt} - t_r^{evt}$ für die gesamten zweiten Ankerknoten berechnet werden, wobei $t_r^{evt}$ die Empfangszeit der Synchronisationsanforderungsnachricht ist, die mittels des Referenztaktgebers gemessen wird; und
(f2) von den Ankunftszeitdifferenzen die Position des Etiketts abgeleitet wird.

8. Verfahren zum Lokalisieren eines Etiketts mittels eines Sensornetzwerks nach Anspruch 7, **dadurch gekennzeichnet, dass** die Schritte (e), (f1) und (f2) von dem Referenzanker ausgeführt werden.

9. Verfahren zum Lokalisieren eines Etiketts mittels eines Sensornetzwerks nach Anspruch 7, **dadurch gekennzeichnet, dass** die Schritte (e) und (f1) von dem Referenzanker ausgeführt werden und dass dieser die Ankunftszeitdifferenzen $t_{i,r}^{evt} - t_r^{evt}$ für die gesamten zweiten Ankerknoten an einen entfernt liegenden Server überträgt, wobei der Server dann ausgehend von diesen den Schritt (f2) ausführt.

**Claims**

1. A method for synchronising nodes within a sensor network, the network comprising a first node called a reference node ($A_r$), provided with a reference clock, and a set of second nodes ($A_i$) distinct from the reference node, each second node being provided with a local clock, said synchronisation being performed upon the occurrence of a given event, observed both by the reference node and the second nodes, comprising the following steps:

(a) upon observing said event (210), said reference node broadcasts (220) a synchronisation message after having time stamped it when emitted by means of the reference clock to provide a first time stamping value $\left(t_r^{sync}\right)$;

and for each second node:

(b) the synchronisation message is received by said second node and time stamped by the local clock of the same when received (230) to provide a second time stamping value $\left(t_i^{sync}\right)$; said method being **characterised in that**:

(c) said second node responds to the synchronisation message received by transmitting to the reference node a response message time stamped by its local clock when emitted (240), to provide a third time stamping value $\left(t_i^{rep}\right)$;

(d) the response message of the second node is received by the reference node and time stamped by the reference clock when received (250) to provide a fourth time stamping value $\left(t_{i,r}^{rep}\right)$;

(e) the time $\left(t_{i,r}^{evt}\right)$ at which the second node has observed said event, measured by means of the reference clock, from the first time stamping value, the second, third and fourth time stamping values associated with the second node, and from the time $\left(t_i^{evt}\right)$ at which the second node has observed said event, measured by means of its local clock, is estimated (260-270).

2. The method for synchronising nodes according to claim 1, **characterised in that** in step (e):

(e1) a propagation time $\left(\tau_{i,r}^{of}\right)$ between the reference node and said second node is determined (260) from the first time stamping value and the second, third and fourth time stamping values associated with the second node;

(e2) the time $\left(t_{i,r}^{evt}\right)$ at which the second node has observed said event, measured by means of the reference clock, is estimated (270) from the first time stamping value, the second time stamping value associated with the second node, the propagation time $\left(\tau_{i,r}^{of}\right)$ between the reference node and said second node, determined in step (e1), and from the time $\left(t_i^{evt}\right)$ at which the second node has observed said event, measured by means of its local clock.

3. The method for synchronising nodes according to claim 2, **characterised in that** the propagation time $\tau_{i,r}^{of}$ between the reference node and said second node is determined in step (e1) by:

$$\tau_{i,r}^{of} = \frac{1}{2}\left(\left(t_{i,r}^{rep} - t_r^{sync}\right) - \frac{(t_i^{rep} - t_i^{sync})}{\delta_{i,r}}\right)$$

Where $t_r^{sync}$ and $t_i^{sync}$, $t_i^{rep}$, $t_{i,r}^{rep}$ are the first time stamping value and the second, third and fourth time stamping values associated with the second nodes ($A_i$) respectively and where $\delta_{i,r}$ is the ratio of the frequency of the local clock of the second node to the frequency of the reference clock.

4. The method for synchronising nodes according to claim 2 or 3, **characterised in that** the time $t_{i,r}^{evt}$ at which the second node has observed said event, measured by means of the reference clock is estimated in step (e2) by:

$$t_{i,r}^{evt} = \left(t_i^{sync} + \tau_{i,r}^{of}\right) - \frac{(t_i^{sync} - t_i^{evt})}{\delta_{i,r}}$$

where $t_r^{sync}$ is the first time stamping value, $t_i^{sync}$ is the second time stamping value associated with the second node ($A_i$), $\tau_{i,r}^{of}$ is the propagation time between the reference node and the second node, $\delta_{i,r}$ is the ratio of the frequency of the local clock of the second node to the frequency of the reference clock, and $t_i^{evt}$ is the time at which the second node has observed said event, measured by means of its reference clock.

5. The method for synchronising nodes according to one of claims 3 or 4, **characterised in that** the ratio $\delta_{i,r}$ of the frequency of the local clock of the second node to the frequency of the reference clock is estimated by the reference node from the reception of a response message preamble (*mes_rep_i*) of the second node, said preamble containing a predetermined pilot sequence.

**6.** The method for synchronising node according to one of the preceding claims, **characterised in that** the response message of the second node (*mes_rep_i*) comprises as arguments, the time $t_i^{evt}$ at which the second node has observed said event, measured by means of its local clock, and the second and third time stamping values $\left(t_i^{sync}, t_i^{rep}\right)$ associated with the second node.

**7.** A method for locating a tag by means of a sensor network, said network comprising a first anchor node having a known position, called a reference anchor (*A_r*), provided with a reference clock, and a set of second anchor nodes (*A_i*), having known positions, which are distinct from the reference anchor, each second anchor node being provided with a local clock, comprising the following steps:

(a0) the tag transmits a synchronisation request message (*mes_clap*) having as an argument an identifier (*Id_r*) of the reference anchor (*A_r*);

(a1) the synchronisation request message is received by the reference anchor and by the second anchor nodes, the reference anchor measuring the reception time $\left(t_r^{evt}\right)$ of said message by means of the reference clock and the second anchor nodes measuring the reception time $\left(t_i^{evt}\right)$ by means of their respective local clocks;

(a2) upon receiving the synchronisation request message (210), the reference anchor broadcasts (220) a synchronisation message after having time stamped it when emitted by means of the reference clock to provide a first time stamping value $\left(t_r^{sync}\right)$;

and for each second anchor node:

(b) the synchronisation message is received by said second anchor node and time stamped by the local clock of the same when received (230) to provide a second time stamping value $\left(t_i^{sync}\right)$;

(c) said second anchor node responds to the synchronisation message received by transmitting to the reference anchor a response message time stamped by its local clock when emitted (240), to provide a third time stamping value $\left(t_i^{rep}\right)$ ; said method being **characterised in that**:

(d) the response message of the second anchor node is received by the reference anchor and time stamped by the reference clock when received (250) to provide a fourth time stamping value $\left(t_{i,r}^{rep}\right)$ ;

(e) the time $t_{i,r}^{evt}$, at which the second anchor node has received the synchronisation request message, measured by means of the reference clock, is estimated (260, 270), from the first time stamping value, the second, third and fourth time stamping values associated with the second anchor node, and from the time $\left(t_i^{evt}\right)$ at which the second anchor node has received the synchronisation request message, measured by means of its local clock; and **in that**

(f1) the time differences of arrival $t_{i,r}^{evt} - t_r^{evt}$, for the set of second anchor nodes are calculated, where $t_r^{evt}$ is the reception time of the synchronisation request message, measured by means of the reference clock; and

(f2) the position of the tag is deduced from said time differences of arrival.

**8.** The method for locating a tag by means of a sensor network according to claim 7, **characterised in that** steps (e), (f1) and (f2) are carried out by the reference anchor.

**9.** The method for locating a tag by means of a sensor network according to claim 7, **characterised in that** steps (e) and (f1) are carried out by the reference anchor and **in that** the latter transmits to a remote server the differences of times of arrival $t_{i,r}^{evt} - t_r^{evt}$, for the set of second anchor nodes, said server then performing step (f2) from these differences.

**Fig. 1**

Observation de l'événement par les
noeuds $A_r$, $A_i$, $i = 1, \ldots N$ — 210

Diffusion d'un message de synchronisation
par le noeud de référence, horodatage du
message lors de son émission — 220

réception du message de
synchronisation par les noeuds $A_i$
horodatage du message à sa réception — 230

réponse des noeuds $A_i$
horodatage des réponses à leur émission — 240

réception des réponses par le noeud de
reference
horodatage des réponses à leur réception — 250

calcul des temps de propagation entre le
noeud de reference et les noeuds $A_i$ — 260

estimation des temps d'observation
$t_{i,r}^{evt}$ mesurés par l'horloge de référence — 270

**Fig. 2**

$T$  $A_r$  $A_i$  $A_j$  $S$

$mes\_clap(Id_r)$

$t_r^{evt}$

310

$t_{i,r}^{evt}$

$t_i^{evt}$

$t_j^{evt}$

$t_r^{sync}$  $mes\_sync$

320

$t_i^{sync}$

$t_j^{sync}$

$mes\_rep\_i$  $t_i^{rep}$

$t_{i,r}^{rep}$  330i

$mes\_rep\_j$  $t_j^{rep}$

330j

$t_{j,r}^{rep}$

calcul de  $t_{i,r}^{evt}$

$t_{i,r}^{evt} - t_r^{evt}$

$i = 1,..,N$  340

TDOA

**Fig. 3**

**EP 3 253 139 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012059903 A
- EP 3021129 A

- WO 2014060277 A

**Littérature non-brevet citée dans la description**

- **J. ELSON et al.** Fine-grained network time synchronization using reference broadcasts. *Proc. of the 5th Symposium on Operating System Design and Implementation, OSDI'02,* 147-143